# EUROPEAN PATENT SPECIFICATION

(11) **EP 3 992 129 B1**
(45) Date of publication and mention of the grant of the patent: **27.05.2026**
(21) Application number: 20205120.7
(22) Date of filing: 02.11.2020
(51) Int. Cl.: B66B 1/28, B66B 5/02

(54) **A METHOD FOR A RESCUE OPERATION AND AN ELEVATOR SYSTEM**
VERFAHREN FÜR EINE RETTUNGSAKTION UND EIN AUFZUGSSYSTEM
PROCÉDÉ POUR UNE OPÉRATION DE SAUVETAGE ET SYSTÈME D'ASCENSEUR

(43) Date of publication of application: 04.05.2022
(73) Proprietor: KONE Corporation, 00330 Helsinki (FI)
(72) Inventor: Jokinen, Markku, 00330 Helsinki (FI); Kattainen, Ari, 00330 Helsinki (FI)
(74) Representative: Kolster Oy Ab

(56) References cited:
- EP-A1- 3 447 016
- JP-A- 2018 030 701
- US-A1- 2007 084 673

## Description

### BACKGROUND OF THE INVENTION

### FIELD OF THE INVENTION

This invention relates to solution for facilitating a rescue operation in an elevator system during power failure in an electric network, for instance.

### DESCRIPTION OF PRIOR ART

Sometimes an operational anomaly, such as a power failure interrupts elevator travel causing stopping of an elevator car between landing floors. In that case the elevator car needs to be relocated to a rescue floor to release passengers from the car. This operation is referred to as rescue operation.

Traditionally, a field technician goes to the elevator site and opens hoisting machinery brakes with a manual brake lever, allowing drifting of the elevator car to a rescue floor by means of gravity. This solution will of course work only with imbalanced load where gravity can be used to move the elevator car in a desired direction. However, in case the load is balanced or imbalanced in a wrong direction preventing movement of the elevator car to a rescue position by gravity, a separate manually operated hoist is needed. In that case the position of the elevator car can be changed with this hoist. Such a rescue operation is slow and labor-intensive.

Previously there is also known from US2007/084673A1 an elevator system with an energy calculator, which calculates total energy required to handle a power outage, plans to prepare and handle a power outage, and with a movement controller which executes the plan if a power outage occurs. A drawback with this solution, is however, that elevator cars need to be allowed to run also during a power outage without braking, in order to ensure that sufficient regenerative power is available.

### SUMMARY OF THE INVENTION

An object of the present invention is to solve the above-mentioned drawback and to provide a solution facilitating a simple and rapid rescue operation without a need for additional expensive devices in the elevator system. This object is achieved with a method according to independent claim 1 and an elevator system according to independent claim 7.

By launching a regenerative operation with a first elevator it becomes possible to energize a drive system of a second elevator having a second elevator car requiring a rescue operation with electric power from the first elevator. With such a solution the electric power needed for driving the second elevator car to a rescue position can be generated without a need for expensive additional equipment.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 is a flow diagram illustrating a method, and
Figure 2 illustrates an elevator system where the method of Figure 1 can be implemented.

### DESCRIPTION OF AT LEAST ONE EMBODIMENT

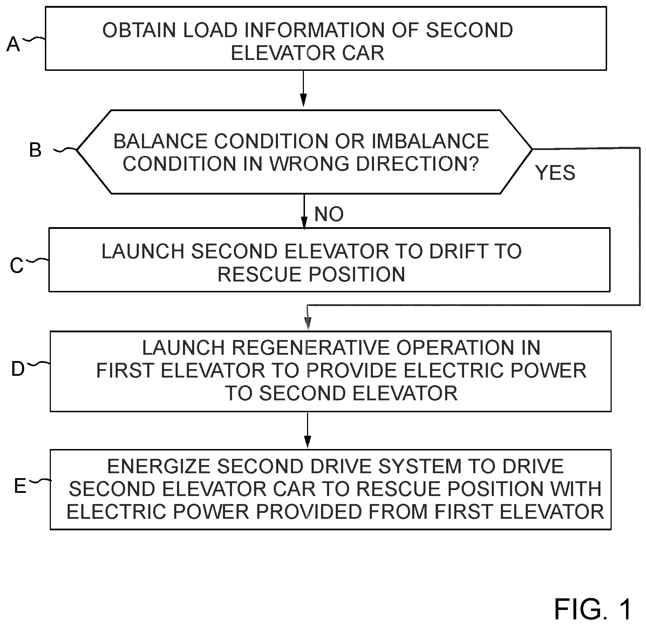

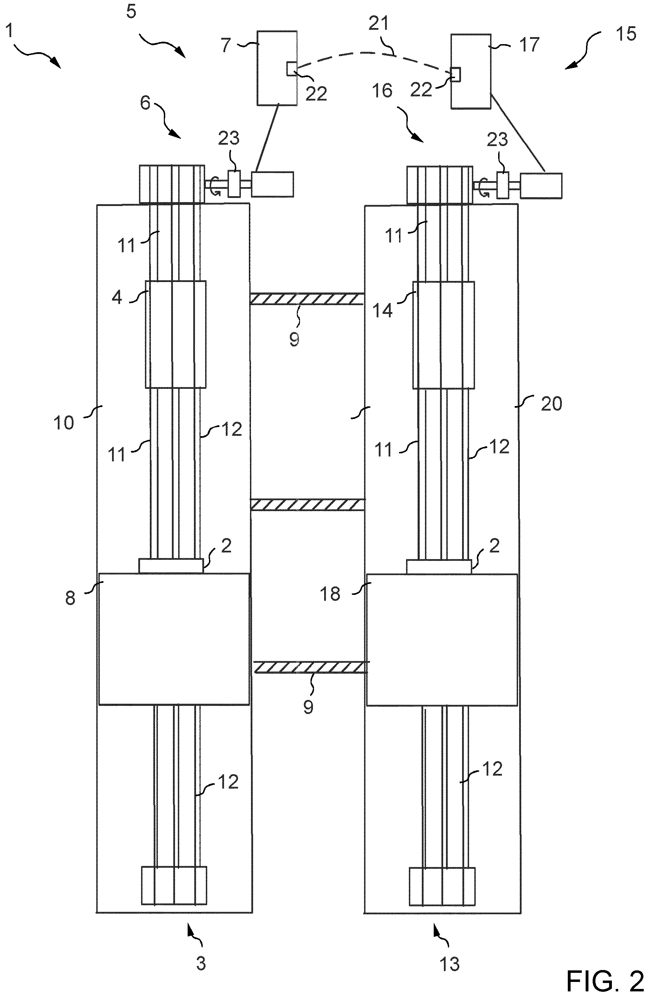

Figure 1 is a flow diagram illustrating a method and Figure 2 illustrates an elevator system 1 where the method of Figure 1 can be implemented.

The elevator system 1 comprises a first elevator 3, with a first elevator car 8, a first counterweight 4 and a first drive system 5. The first drive system 5 includes a first hoisting machine 6 with an electric motor and a brake 23 and a first control cabinet 7 with a motor drive, such as frequency converter, for instance. The first drive system 5 moves the first elevator car 8 and the first counterweight 4 in a first elevator shaft 10 by means of ropes 11 between landing floors 9 of the building. In the illustrated example it is by way of example assumed that the first elevator is also provided with compensation ropes 12 between the elevator car 8 and the counterweight 4.

Additionally, the elevator system 1 comprises at least one additional elevator. In Figure 2, the second elevator 13 comprises a second elevator car 18, a second counterweight 14 and a second drive system 15. The second drive system 15 includes a second hoisting machine 16 with an electric motor, a brake 23 and a second control cabinet 17 with a motor drive, such as frequency converter, for instance. The second drive system 15 moves the second elevator car 18 and the second counterweight 14 in a second elevator shaft 20 by means of ropes 11 and by utilizing compensation ropes 12 between landing floors 9 of the building.

In the illustrated example it has by way of example been assumed that the fist 7 and second 17 control cabinets are implemented as separate control cabinets located at a distance from each other. In some implementations, the first and second control cabinets may be located side by side, as illustrated, or alternatively as integrated into one single control cabinet only. In that case the single control cabinet includes the necessary parts for both the first 3 and second elevator 13.

In case one of the first and second elevator car gets stuck between landing floors 9 of the building due to a power failure in the mains electrical network supplying electricity to the building in question, a rescue operation to move the stuck elevator car to a landing floor where passengers can leave the second elevator car may be implemented as illustrated in Figure 1. In the following it is by way of example assumed that it is specifically the second elevator car which is stuck and requires a rescue operation.

In step A load information of the second elevator car 18 is obtained. In the claimed system, this load information may be obtained from a load sensor 2 if such a load sensor is provided. In the illustrated example, it is by way of example assumed that both the first elevator car 8 and the second elevator car 18 are provided with a load sensor at the interface from where the elevator car in question is suspended to the ropes 11. In that way the load of the elevator car, in other words weight of elevator car with passengers and cargo, can be determined based on the indication from the load sensor 2 of the second elevator car 18. This reading in combination with prior information about what the load should be when a balance condition exists for the second elevator car is used to determine the load information.

In the claimed method the load information of the second elevator car 18 is obtained by opening the brakes of the second elevator car 18 for a short period of time and monitor any movement and movement direction of the second elevator car 18 while the brakes are open. This is also an alternative way of obtaining the load information in the claimed system. The brakes which are opened may include hoisting machinery brakes 23 of the second drive system 16, for instance. This opening of brakes and monitoring of movement can be manually made by service personal on site. With this alternative approach, no load sensor is needed to obtain the load information.

If in step B an imbalance condition in a correct direction is determined, in other words the second elevator car 18 drifts by gravity towards a rescue position when the brakes 23 are opened, it is sufficient to launch in step C the second elevator car 18 to drift to the rescue position by opening the brakes in the second elevator and allowing the second elevator car 18 to drift by gravity to the rescue position while applying motor braking to keep the speed suitable. Depending on the implementation, the drifting may require that also other brakes are opened in addition to the hoisting machinery brake. Motor braking may be affected by modulating motor inverter transistors actively to generate a rotation magnetic field, for instance. Alternatively, motor braking may be affected by passively shorting motor windings of a permanent magnet elevator motor to enable passive dynamic braking. In any case, no electricity is needed to drive the second elevator car 18 to the rescue position. A suitable rescue position is in that case the closest landing floor 9 located below the position where the second elevator car 18 is stuck in the second elevator shaft 14 where passengers and cargo may be taken out of the second elevator car 18.

However, in case a balance condition or an imbalance condition in a wrong direction is detected in step B, additional measures are needed for the rescue operation. If a balance condition is determined, this means that the second elevator car 18 and counterweight 14 with the ropes 11 and compensation ropes 12 are in balance, due to which the second elevator car 18 remains stationary in the elevator shaft 14 when the brakes 23 are released. On the other hand, if an imbalance condition in a wrong direction is determined, this means that the imbalance is in a direction preventing the second elevator car from drifting towards a rescue position. This may occur in case the second elevator car 18 is heavily loaded and located below the lowest landing floor 9 such that the drifting direction due to gravity would be downwards in the wrong direction, for instance.

Consequently, if a balance condition or an imbalance condition in a wrong direction is determined for the second elevator car 18 in step B, then in step D a regenerative operation is launched in the first elevator 3 to provide electric power to the second drive system 15 of the second elevator 13.

In step E the second drive system 15 of the second elevator 13 is energized to drive the second elevator car 18 to a rescue position with the electric power provided from the first elevator 3.

In order to provide electric power from the first elevator 3 to the second elevator 13, a power distribution system of the building will be utilized in the claimed method. According to an exemplary embodiment, an electricity distribution network of the building may be utilized. Alternatively in the claimed method, and in the claimed system a supply conductor 21 (such as a cable) is utilized, which may be connected between regenerative operation interfaces 22 in the first 3 and second 13 elevators, such as between the first and second control cabinets 7 and 17. This supply conductor may be permanently attached between these interfaces, in which case a service technician may take it into via use by turning one or more switches in a rescue operation control of the elevator system, for instance. Alternatively, the supply conductor 21 may be a separate cable which is mounted and connected in a separate method step prior to launching the regenerative operation with the first elevator 3. With the supply conductor 21, the drive systems of the first and second elevator may be connected to provide a common electricity distribution network of the elevator system, which enables power sharing between the elevators. Alternatively, DC links of the power converters of the drive systems may be interconnected via one or more power cables or busbars.

The regenerative operation may be implemented to utilize potential energy of the first elevator car 8, or alternatively, of the counter first weight 4 depending on the balance in the first elevator at the moment, which is allowed to ascend or descend by gravity in the first elevator shaft 10. In that case regenerative operation of the first hoisting machinery 6 of the first elevator may be utilized to produce the electric power.

In some implementations, the power consumption of the second elevator 13 is monitored during the energizing. This monitoring may be carried out by the motor drive in the second control cabinet 17, for instance, from where the information about the power consumption is passed on to the first control cabinet 7. The first control cabinet 7 utilizes the received information to control the electric power provided to the second elevator 13 to match the power consumption of the second elevator 13 during the energizing. This matching may be implemented by consuming extra regenerative power into heat in the drive system of the first elevator 3 by utilizing resistors, such as braking resistors of the first elevator or the motor of the first hoisting machine 6, for instance. Such active control of the regenerated power eliminates the risk that an UPS (Uninterruptable Power Supply) provided to the elevator system or to each separate elevator of the elevator system breaks due to the provided regenerated power.

An advantage obtained by the above described solution is that it is not necessary to provide the elevator system 1 with a power backup, such as an UPS, having sufficient power to drive an elevator car during a rescue operation necessitated by a power failure in a mains network, for instance. The elevator system 1 may instead be provided with a much smaller battery backup, for instance, which provides sufficient power only to emergency lighting, control operation of brakes and control circuitry, for instance, however, without a need to provide power signals from the battery backup for driving a hoisting machine to move an elevator to a rescue position. Such a small and relatively inexpensive battery backup may be provided separately for each elevator in an elevator system or as a single common battery backup for all elevators of the same elevator system.

In the previous explanation it has for simplicity been explained that it is the first elevator that is used for the regenerative operation while the second elevator car is driven to a rescue position. However, in practice the roles can be the other way around such that the first elevator car is driven to a rescue position during a regenerative operation with the first elevator.

It is to be understood that the above description and the accompanying figures are only intended to illustrate the present invention. It will be obvious to a person skilled in the art that the invention can be varied and modified without departing from the scope of the invention.

## Claims

1. A method for a rescue operation to move a stuck elevator car to a rescue position at a landing floor in an elevator system having at least a first elevator (3) with a first elevator car (8), a first counterweight (4) and a first drive system (5), and a second elevator (13) with a second elevator car (18), a second counterweight (14) and a second drive system (15), **characterized in that** a rescue operation of the second elevator car which is stuck comprises:
obtaining (A) load information of the second elevator car (18), by opening brakes (23) of the second elevator (13), monitoring movement of the second elevator car (18), and determining the load information of the second elevator car (18) based on detected movement and a movement direction of the second elevator car while the brakes (23) are open,
launching (D) a regenerative operation with the first elevator (3) to provide electric power from the first elevator (3) to the second drive system (15) if the obtained load information indicates a balance condition of the second elevator car (18) or an imbalance condition in a direction preventing the second elevator car from drifting towards a rescue position at the landing floor, and
energizing the second drive system (17) to drive the second elevator car (18) to a rescue position at the landing floor with the electric power provided from the first elevator (3).

2. The method according to claim 1, comprising:
connecting a power distribution system of a building supplying said electric power from the first elevator (3) to the second drive system (15) between the first (3) and second elevator (13) prior to said launching.

3. The method according to claim 1 or 2, comprising:
launching the second elevator car (18) to drift to the rescue position, if the obtained load information indicates an imbalance of the second elevator car (13) in a direction allowing drift of the second elevator (18) car to the rescue position.

4. The method according to one of claims 1 to 3, comprising:
monitoring power consumption of the second elevator (13) during said energizing, and
controlling the electric power provided to the second elevator (13) during said energizing to match the power consumption of the second elevator.

5. The method according to claim 4, comprising:
controlling the electric power provided to the second elevator (13) during said energizing to match the power consumption of the second elevator (13) by producing heat with excess regenerative power by resistors of the first elevator (3).

6. The method according to claim 4 comprising:
controlling the electric power provided to the second elevator (13) during said energizing to match the power consumption of the second elevator (13) by producing heat with excess regenerative power by a first hoisting machine (6) of the first elevator (3).

7. An elevator system comprising:
at least a first (3) and a second elevator (13), the first elevator (3) having a first elevator car (8), a first counterweight (4) and a first drive system (5), and the second elevator (13) having a second elevator car (8), a second counterweight (14) and a second drive system (15) which includes a brake (23) that can be opened manually,
a regenerative operation interface (22) in the first elevator (3), and
a regenerative operation interface (22) in the second elevator (13), **characterized in that**
the regenerative operation interface (22) in the first elevator (3) is to provide electric power from the first elevator (3) to the second elevator (13), and
the regenerative operation interface (22) in the second elevator (13) is for receiving the electric power from the first elevator (3) and for energizing the second drive system (16) to drive the second elevator car (18) to a rescue position, and
the elevator system comprises for a rescue operation to move a stuck elevator car to a rescue position at a landing floor:
a supply conductor (21) which is a separate cable and which is connected between the regenerative operation interfaces (22) in the first (3) and second (13) elevators in a separate step prior to launching a regenerative operation to provide electric power from the first elevator (3) to the second elevator (13) for energizing the second drive system (16) to drive the second elevator car (18) to a rescue position at the landing floor in the rescue operation if a balance condition or an imbalance condition in a wrong direction is determined for the second elevator car (18) based on load information obtained by opening said brake (23) or from a load sensor (2) included in the elevator system, or
one or more switches in a rescue operation control of the elevator system and a supply conductor (21) permanently attached between the regenerative operation interfaces (22) and which may be taken into use by a service technician turning said switches to provide electric power from the first elevator (3) to the second elevator (13) in a regenerative operation for energizing the second drive system (16) to drive the second elevator car (18) to a rescue position at the landing floor in the rescue operation if a balance condition or an imbalance condition in a wrong direction is determined for the second elevator car (18) based on load information obtained by opening said brake (23) or from a load sensor (2) included in the elevator system .

8. The elevator system according to claim 7, wherein the elevator system comprises at least one control cabinet (7, 17) monitoring power consumption of the second elevator (13) while the second drive system (16) drives the second elevator car to the rescue position, and adjusting the electric power provided by the regenerative operation from the first elevator (3) via the power distribution system of the building (21) to match the power consumed by the second elevator (13) during the driving.

## Patentansprüche

1. Verfahren für eine Rettungsaktion, um eine feststeckende Aufzugskabine zu einer Rettungsposition an einem Haltestockwerk in einem Aufzugssystem, das mindestens einen ersten Aufzug (3) mit einer ersten Aufzugskabine (8), einem ersten Gegengewicht (4) und einem ersten Antriebssystem (5) und einen zweiten Aufzug (13) mit einer zweiten Aufzugskabine (18), einem zweiten Gegengewicht (14) und einem zweiten Antriebssystem (15) aufweist, zu bewegen, **dadurch gekennzeichnet, dass** eine Rettungsaktion der zweiten Aufzugskabine, die feststeckt, umfasst:
Erhalten (A) von Lastinformation der zweiten Aufzugskabine (18) durch Öffnen von Bremsen (23) des zweiten Aufzugs (13), Überwachen einer Bewegung der zweiten Aufzugskabine (18) und Bestimmen der Lastinformation der zweiten Aufzugskabine (18), basierend auf detektierter Bewegung und einer Bewegungsrichtung der zweiten Aufzugskabine, während die Bremsen (23) geöffnet sind,
Starten (D) eines regenerativen Betriebs mit dem ersten Aufzug (3), um elektrische Leistung vom ersten Aufzug (3) an das zweite Antriebssystem (15) bereitzustellen, wenn die erhaltene Lastinformation einen Gleichgewichtszustand der zweiten Aufzugskabine (18) oder einen Ungleichgewichtszustand in einer Richtung anzeigt, die verhindert, dass die zweite Aufzugskabine in Richtung auf eine Rettungsposition am Haltestockwerk driftet, und
Bestromen des zweiten Antriebssystems (17), um die zweite Aufzugskabine (18) mit der vom ersten Aufzug (3) bereitgestellten elektrischen Leistung zu einer Rettungsposition am Haltestockwerk zu fahren.

2. Verfahren nach Anspruch 1, umfassend:
Schalten eines Stromverteilungssystems des Gebäudes, das die elektrische Leistung vom ersten Aufzug (3) an das zweite Antriebssystem (15) bereitstellt, zwischen dem ersten (3) und dem zweiten Aufzug (13) vor dem Starten.

3. Verfahren nach Anspruch 1 oder 2, umfassend:
Einleiten, dass die zweite Aufzugskabine (18) zur Rettungsposition driftet, wenn die erhaltene Lastinformation einen Ungleichgewichtszustand der Kabine des zweiten Aufzugs (13) in einer Richtung anzeigt, die ein Driften der Kabine des zweiten Aufzugs (18) zur Rettungsposition erlaubt.

4. Verfahren nach einem der Ansprüche 1 bis 3, umfassend:
Überwachen der Leistungsaufnahme des zweiten Aufzugs (13) während des Bestromens, und
Regeln der dem zweiten Aufzug (13) während des Bestromens bereitgestellten elektrischen Leistung, sodass sie der Leistungsaufnahme des zweiten Aufzugs entspricht.

5. Verfahren nach Anspruch 4, umfassend:
Regeln der dem zweiten Aufzug (13) während des Bestromens bereitgestellten elektrischen Leistung, sodass sie der Leistungsaufnahme des zweiten Aufzugs (13) entspricht, durch Erzeugen von Wärme mit überschüssiger regenerativer Leistung mittels Widerständen des ersten Aufzugs (3).

6. Verfahren nach Anspruch 4, umfassend:
Regeln der dem zweiten Aufzug (13) während des Bestromens bereitgestellten elektrischen Leistung, sodass sie der Leistungsaufnahme des zweiten Aufzugs (13) entspricht, durch Erzeugen von Wärme mit überschüssiger regenerativer Leistung mittels einer ersten Hubmaschine (6) des ersten Aufzugs (3).

7. Aufzugssystem umfassend:
mindestens einen ersten (3) und einen zweiten Aufzug (13), der erste Aufzug (3) aufweisend eine erste Aufzugskabine (8), ein erstes Gegengewicht (4) und ein erstes Antriebssystem (5), und der zweite Aufzug (13) aufweisend eine zweite Aufzugskabine (8), ein zweites Gegengewicht (14) und ein zweites Antriebssystem (15), das eine Bremse (23) einschließt, die von Hand geöffnet werden kann,
eine Schnittstelle für den regenerativen Betrieb (22) im ersten Aufzug (3), und
eine Schnittstelle für den regenerativen Betrieb (22) im zweiten Aufzug (13), **dadurch gekennzeichnet, dass**
die Schnittstelle für den regenerativen Betrieb (22) im ersten Aufzug (3) dazu vorgesehen ist, elektrische Leistung vom ersten Aufzug (3) an den zweiten Aufzug (13) bereitzustellen, und
die Schnittstelle für den regenerativen Betrieb (22) im zweiten Aufzug (13) zum Empfangen der elektrischen Leistung vom ersten Aufzug (3) und zum Bestromen des zweiten Antriebssystems (16) vorgesehen ist, um die zweite Aufzugskabine (18) zu einer Rettungsposition zu fahren, und
das Aufzugssystem für eine Rettungsaktion, um eine feststeckende Aufzugskabine zu einer Rettungsposition an einem Haltestockwerk zu bewegen, umfasst:
eine Versorgungsleitung (21), die ein separates Kabel ist und die zwischen den Schnittstellen für den regenerativen Betrieb (22) in den ersten (3) und zweiten (13) Aufzügen in einem separaten Schritt vor dem Starten eines regenerativen Betriebs geschaltet ist, um elektrische Leistung vom ersten Aufzug (3) an den zweiten Aufzug (13) bereitzustellen, zum Bestromen des zweiten Antriebssystems (16), um die zweite Aufzugskabine (18) in der Rettungsaktion zu einer Rettungsposition am Haltestockwerk zu fahren, wenn für die zweite Aufzugskabine (18) basierend auf Lastinformation, die durch Öffnen der Bremse (23) oder von einem Lastsensor (2), den das Aufzugssystem einschließt, erhalten wird, ein Gleichgewichtszustand oder ein Ungleichgewichtszustand in einer falschen Richtung bestimmt wird, oder
einen oder mehrere Schalter in einer Rettungssteuerung des Aufzugssystems und eine Versorgungsleitung (21), die dauerhaft zwischen den Schnittstellen für den regenerativen Betrieb (22) angebracht ist und die von einem Servicetechniker durch Umlegen der Schalter in Gebrauch genommen werden kann, um in einem regenerativen Betrieb elektrische Leistung vom ersten Aufzug (3) an den zweiten Aufzug (13) bereitzustellen, zum Bestromen des zweiten Antriebssystems (16), um die zweite Aufzugskabine (18) in der Rettungsaktion zu einer Rettungsposition am Haltestockwerk zu fahren,
wenn für die zweite Aufzugskabine (18) basierend auf Lastinformation, die durch Öffnen der Bremse (23) oder von einem Lastsensor (2), den das Aufzugssystem einschließt, erhalten wird, ein Gleichgewichtszustand oder ein Ungleichgewichtszustand in einer falschen Richtung bestimmt wird.

8. Aufzugssystem nach Anspruch 7, wobei das Aufzugssystem mindestens einen Steuerschrank (7, 17) umfasst, der die Leistungsaufnahme des zweiten Aufzugs (13) überwacht, während das zweite Antriebssystem (16) die zweite Aufzugskabine zur Rettungsposition fährt,
und Anpassen der durch den regenerativen Betrieb bereitgestellten elektrischen Leistung des ersten Aufzugs (3) über das Stromverteilungssystem des Gebäudes (21), sodass sie der vom zweiten Aufzug (13) während des Fahrens verbrauchten Leistung entspricht.

## Revendications

1. Procédé pour une opération de sauvetage pour déplacer une cabine d'ascenseur bloquée vers une position de sauvetage à un palier d'étage dans un système d'ascenseur présentant au moins un premier ascenseur (3) avec une cabine (8) de premier ascenseur, un premier contrepoids (4) et un premier système d'entraînement (5), et un deuxième ascenseur (13) avec une cabine (18) de deuxième ascenseur, un deuxième contrepoids (14) et un deuxième système d'entraînement (15), **caractérisé en ce qu'**une opération de sauvetage de la cabine de deuxième ascenseur qui est bloquée comprend :
l'obtention (A) d'informations de charge de la cabine (18) de deuxième ascenseur, par ouverture des freins (23) du deuxième ascenseur (13), en surveillant le mouvement de la cabine (18) de deuxième ascenseur, et en déterminant les informations de charge de la cabine (18) de deuxième ascenseur sur la base d'un mouvement détecté et d'une direction de mouvement de la cabine de deuxième ascenseur pendant que les freins (23) sont ouverts,
le lancement (D) d'une opération régénérative avec le premier ascenseur (3) pour fournir une énergie électrique depuis le premier ascenseur (3) au deuxième système d'entraînement (15) si les informations de charge obtenues indiquent une condition d'équilibrage de la cabine (18) de deuxième ascenseur ou une condition de déséquilibre dans une direction empêchant la cabine de deuxième ascenseur de dériver vers une position de sauvetage au palier d'étage, et
la mise sous tension du deuxième système d'entraînement (17) pour entraîner la cabine (18) de deuxième ascenseur vers une position de sauvetage au palier d'étage avec l'énergie électrique fournie depuis le premier ascenseur (3).

2. Procédé selon la revendication 1, comprenant :
la liaison d'un système de distribution électrique d'un bâtiment fournissant ladite énergie électrique depuis le premier ascenseur (3) au deuxième système d'entraînement (15) entre le premier (3) et deuxième ascenseur (13) avant ledit lancement.

3. Procédé selon la revendication 1 ou la revendication 2, comprenant :
le lancement de la cabine (18) de deuxième ascenseur pour dériver vers la position de sauvetage, si les informations de charge obtenues indiquent une condition de déséquilibre de la cabine de deuxième ascenseur (13) dans une direction permettant une dérive de la cabine (18) de deuxième ascenseur vers la position de sauvetage.

4. Procédé selon l'une quelconque des revendications 1 à 3, comprenant :
la surveillance de la consommation d'énergie du deuxième ascenseur (13) pendant ladite mise sous tension, et
la commande de l'énergie électrique fournie au deuxième ascenseur (13) pendant ladite mise sous tension pour correspondre à la consommation d'énergie du deuxième ascenseur.

5. Procédé selon la revendication 4, comprenant :
la commande de l'énergie électrique fournie au deuxième ascenseur (13) pendant ladite mise sous tension pour correspondre à la consommation d'énergie du deuxième ascenseur (13) en produisant de la chaleur avec une énergie régénérative excédentaire par des résistances du premier ascenseur (3).

6. Procédé selon la revendication 4 comprenant :
la commande de l'énergie électrique fournie au deuxième ascenseur (13) pendant ladite mise sous tension pour correspondre à la consommation d'énergie du deuxième ascenseur (13) en produisant de la chaleur avec une énergie régénérative excédentaire au moyen d'une première machine de levage (6) du premier ascenseur (3).

7. Système d'ascenseur comprenant :
au moins un premier (3) et un deuxième ascenseur (13), le premier ascenseur (3) présentant une cabine (8) de premier ascenseur, un premier contrepoids (4) et un premier système d'entraînement (5), et le deuxième ascenseur (13) présentant une cabine (8) de deuxième ascenseur, un deuxième contrepoids (14) et un deuxième système d'entraînement (15) qui inclut un frein (23) qui peut être ouvert manuellement,
une interface d'opération régénérative (22) dans le premier ascenseur (3), et
une interface d'opération régénérative (22) dans le deuxième ascenseur (13), **caractérisé en ce que**
l'interface d'opération régénérative (22) dans le premier ascenseur (3) est destinée à fournir une énergie électrique depuis le premier ascenseur (3) au deuxième ascenseur (13), et
l'interface d'opération régénérative (22) dans le deuxième ascenseur (13) est destinée à recevoir l'énergie électrique depuis le premier ascenseur (3) et à mettre sous tension le deuxième système d'entraînement (16) pour entraîner la cabine (18) de deuxième ascenseur vers une position de sauvetage, et
le système d'ascenseur comprend pour une opération de sauvetage pour déplacer une cabine d'ascenseur bloquée vers une position de sauvetage à un palier d'étage :
un conducteur d'alimentation (21) qui est un câble séparé et qui est relié entre les interfaces d'opération régénérative (22) dans les premier (3) et deuxième (13) ascenseurs dans une étape séparée avant de lancer une opération régénérative pour fournir une énergie électrique depuis le premier ascenseur (3) au deuxième ascenseur (13) pour mettre sous tension le deuxième système d'entraînement (16) pour entraîner la cabine (18) de deuxième ascenseur vers une position de sauvetage au palier d'étage dans l'opération de sauvetage si une condition d'équilibrage ou une condition de déséquilibre dans une mauvaise direction est déterminée pour la cabine (18) de deuxième ascenseur sur la base d'informations de charge obtenues par ouverture dudit frein (23) ou à partir d'un capteur de charge (2) inclus dans le système d'ascenseur, ou
un ou plusieurs interrupteurs dans une commande d'opération de sauvetage du système d'ascenseur et un conducteur d'alimentation (21) attaché de manière permanente entre les interfaces d'opération régénérative (22) et qui peut être mis en service par un technicien de maintenance actionnant lesdits interrupteurs pour fournir une énergie électrique depuis le premier ascenseur (3) au deuxième ascenseur (13) dans une opération régénérative pour mettre sous tension le deuxième système d'entraînement (16) pour entraîner la cabine (18) de deuxième ascenseur vers une position de sauvetage au palier d'étage dans l'opération de sauvetage, si une condition d'équilibrage ou une condition de déséquilibre dans une mauvaise direction est déterminée pour la cabine (18) de deuxième ascenseur sur la base d'informations de charge obtenues par ouverture dudit frein (23) ou à partir d'un capteur de charge (2) inclus dans le système d'ascenseur.

8. Système d'ascenseur selon la revendication 7, dans lequel le système d'ascenseur comprend au moins une armoire de commande (7, 17) surveillant la consommation d'énergie du deuxième ascenseur (13) tandis que le deuxième système d'entraînement (16) entraîne la cabine de deuxième ascenseur vers la position de sauvetage, et ajustant l'énergie électrique fournie par l'opération régénérative depuis le premier ascenseur (3) via le système de distribution électrique du bâtiment (21) pour correspondre à l'énergie consommée par le deuxième ascenseur (13) pendant l'entraînement.
